Europäisches Patentamt

European Patent Office

Office européen des brevets

(11) Numéro de publication: **0 161 125**
**A1**

## (12) DEMANDE DE BREVET EUROPEEN

(21) Numéro de dépôt: **85400497.5**

(22) Date de dépôt: **14.03.85**

(51) Int. Cl.⁴: **B 32 B 31/00**
**C 03 C 27/12, B 29 C 65/02**

(30) Priorité: **14.03.84 FR 8403949**

(43) Date de publication de la demande:
**13.11.85 Bulletin 85/46**

(84) Etats contractants désignés:
**AT BE CH DE GB IT LI LU NL SE**

(71) Demandeur: **Perus, René**
**7 allée des Aulnes**
**F-57400 Sarrebourg(FR)**

(72) Inventeur: **Perus, René**
**7 allée des Aulnes**
**F-57400 Sarrebourg(FR)**

(74) Mandataire: **CABINET BONNET-THIRION**
**95 Boulevard Beaumarchais**
**F-75003 Paris(FR)**

(54) **Procédé et dispositif de fabrication de verre feuilleté de sécurité.**

(57) Le feuilleté (2), constitué par empilement alterné de feuilles de verre et de feuilles de thermoplastique est placé sur une bande transporteuse (1) à avance indexée. En position (2) le feuilleté est chauffé par pertes diélectriques entre les plaques (3a) et (3b), reliées au générateur (4). A la position (2') le feuilleté est serré entre les plaques vérins (5a) et (5b) dont les faces en regard sont garnies de parois souples fixées de façon étanche par leurs bords. On introduit de l'air sous pression par des canalisations telles que (5c) entre la plaque vérin (5a, 5b) et sa paroi souple. Le gonflage progressif fait bomber les parois souples, et la zone de serrage du feuilleté (2') se développe progressivement du centre vers les bords, en chassant l'air emprisonné dans le feuilleté (2'). Après figeage de la matière thermoplastique le feuilleté (2") est déchargé.

FIG. 1

Procédé et dispositif de fabrication de verre feuilleté de
sécurité

L'invention se rapporte à un procédé de fabrication de
verre feuilleté de sécurité, où l'on constitue un feuilleté en
alternant feuilles de verre et feuilles de matière thermoplastique transparente, les feuilles extrêmes étant de verre, on
chauffe le feuilleté en sorte de ramollir la matière thermoplastique jusqu'à la rendre susceptible d'adhérer au verre, on
évacue l'air présent dans le feuilleté pour accomplir le contact intime entre verre et matière plastique, et on laisse refroidir le feuilleté au moins jusqu'à figeage de la matière
thermoplastique. L'invention a trait également à des dispositifs pour fabriquer du verre feuilleté suivant le procédé de
l'invention.

Les procédés classiques de fabrication des verres feuilletés de sécurité, en vitrages plans ou panneaux de forme tels
que parebrises de véhicules, consistent à constituer un feuilleté en alternant feuilles de verre, lavées, dégraissées et
séchées, et feuilles de thermoplastique, le plus souvent en
poly(butyral de vinyle), les feuilles extrêmes étant de verre,
à fixer le feuilleté sur ses bords par des pinces, et à chauffer sous pression en autoclave (150°C, 12 bars), pour assurer
l'adhésion de la matière thermoplastique ramollie sur le verre.
Pour éviter des inclusions d'air dans le feuilleté terminé, on
commence fréquemment par mettre l'autoclave en dépression temporaire. Egalement on peut poser sur les bords du feuilleté un
cadre en élastomère qui présente des lèvres en appui sur les
faces extrêmes du feuillet, et forme un canal périphérique où
débouchent les interstices entre feuilles successives. Le canal
est relié à une pompe à vide. Le chauffage peut alors se faire
en étuve (90°C), la pression atmosphérique sur les faces extérieures du feuilleté assurant alors la soudure verre/matière
thermoplastique.

Les inconvénients des procédés classiques évoqués ci-
dessus découlent de la lenteur de prise de température du
feuilleté, l'apport de chaleur s'opérant à partir d'un milieu
porté à une température peu supérieure à la température à
laquelle doit être portée la matière thermoplastique pour se souder au verre, pour évit.       surchauffes locales, et les
transferts de chaleur de l'e térieur vers l'intérieur du feuilleté se faisant par conducion à travers des matériaux relativement isolants thermiquement. Il en résulte que, pour obtenir
des cadences de production raisonnables, il est nécessaire
d'opérer simultanément sur une multiplicité de feuilletés, ce
qui entraîne une multiplication des autoclaves ou une extension
de l'encombrement des étuves, et en corollaire un développement
des investissements. Une conséquence indirecte est la rigidité
des cadences de production pour éviter un sous-emploi des équipements de production.

Aussi l'invention vise un procédé de fabrication de verres
feuilletés de sécurité qui mette en oeuvre un cycle opératoire
bref, au moins pour les opérations actives, afin de réduire le
nombre de feuilletés en élaboration simultanée, et partant
l'importance des équipements de production et la rigidité des
cadences de production.

A cet effet l'invention propose un procédé de fabrication
de verre feuilleté de sécurité, où l'on constitue un feuilleté
en alternant feuilles de verre et feuilles de matière thermoplastique transparente, les feuilles extrêmes étant de verre,
on chauffe le feuilleté en sorte de ramollir la matière thermoplastique jusqu'à la rendre susceptible d'adhérer au verre, on
évacue l'air présent dans le feuilleté pour accomplir le contact intime entre verre et matière thermoplastique, puis on
laisse refroidir le feuilleté au moins jusqu'à figeage de la
matière thermoplastique, procédé caractérisé en ce que l'on
soumet le feuilleté à un champ électrique à une fréquence où
les pertes diélectriques de la matière thermoplastique sont
notables, pendant une durée suffisante pour que la matière ramollisse, on dispose le feuilleté entre deux parois souples
confinant respectivement deux enceintes où peut être admis un
fluide sous pression, les parois souples étant sensiblement
parallèles au feuilleté, et sensiblement plus écartées que
l'épaisseur de ce feuilleté, et on admet progressivement le
fluide sous pression dans les enceintes en sorte que les parois
souples en se déformant viennent serrer le feuilleté d'abord
dans une zone centrale qui s'élargit ensuite jusqu'à couvrir toute la surface du feuilleté.

Il est bien connu qu'aux fréquences usuelles en matière de chauffage par pertes diélectriques, de nombreuses matières thermoplastiques, notamment des composés à structures polaires, présentent des facteurs de pertes notablement plus élevées que le verre, de sorte que les pertes se localisent essentiellement dans la matière thermoplastique. L'échauffement se produit donc au sein du feuilleté, qui se trouve en état rapidement de se souder. Par la suite, le pressage exécuté entre les parois souples gonflées par le fluide sous pression, dans des conditions qui assurent que l'air emprisonné dans le feuilleté n'y reste pas inclus, est effectué en opération distincte du chauffage, ce qui permet une opération rapide et limitée à ce qui est strictement nécessaire à l'adhérence de la matière thermoplastique sur le verre, d'autant que ce pressage a tendance à provoquer un refroidissement des surfaces du feuilleté.

Pour fabriquer des vitrages plans notamment, on peut opérer en deux postes, le chauffage s'exécutant au premier poste entre deux armatures planes d'un condensateur relié aux bornes du générateur haute fréquence, et le pressage s'exécutant au second poste entre des parois souples sensiblement planes écartées de plusieurs fois l'épaisseur du feuilleté, afin de présenter, après gonflage, un bombé qui assure une extension progressive régulière de la zone de feuilleté sous pression.

Notamment pour fabriquer des feuilletés de forme, on peut opérer à un seul poste ; des plateaux métalliques, de forme générale correspondant à celle du feuilleté, sont garnis de parois souples sur leurs faces affrontées, et des canaux sont prévus pour amener le fluide sous pression entre les plateaux et les parois souples. Dans un premier temps, de chauffage, les plateaux sont rapprochés et mis sous tension haute fréquence. Dans un deuxième temps, de pressage, les plateaux sont quelque peu écartés, et le fluide sous pression admis sous les parois souples qui se gonflent et évacuent l'air comme précédemment.

Il est clair que la fabrication à deux postes permet une cadence de production sensiblement double de la fabrication en un seul poste, la durée de chauffage par haute fréquence constituant durée de base d'opération. Par contre la fabrication en un seul poste suppr    es manipulations du feuilleté avec la matière thermoplastique molle, qui s'avèrent délicates avec les feuilletés de forme. On notera en outre que, pour les feuilletés de forme, les électrodes de chauffage et les semelles des enceintes de pressage doivent être de même forme générale également, de sorte qu'il est intéressant d'utiliser des plateaux à fonctions doubles, pour réduire les frais d'outillage.

Les dispositifs pour la fabrication de vitrages plans en deux postes mettront en oeuvre un transporteur à bande horizontale à avance indexée, les électrodes de chauffage étant disposées à une première position d'index, et les enceintes de pressage à une seconde position, en aval de la première.

Les caractéristiques et avantages de l'invention ressortiront d'ailleurs de la description qui va suivre à titre d'exemple, en  référence aux dessins annexés dans lesquels :

la figure 1 représente la disposition générale de fabrication de verres feuilletés plans en deux postes, suivant l'invention ;

les figures 2A à 2C représentent schématiquement les stades de l'opération de pressage en coupe suivant le plan II-II de la figure 1 ;

la figure 3 est une coupe d'un verre feuilleté ;

les figures 4A à 4D représentent les divers stades de fabrication de verre feuilleté de forme, en un seul poste.

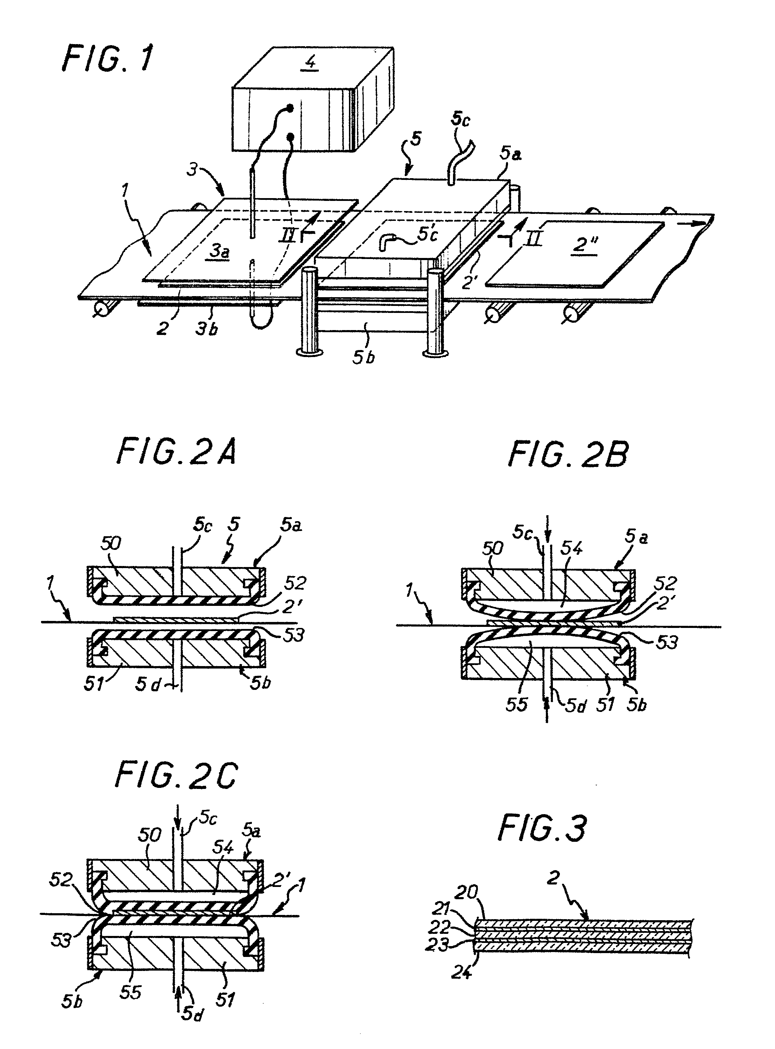

Selon la forme de réalisation choisie et représentée figure 1, un transporteur à bande 1, à avance indexée, reçoit des panneaux préparés d'empilements ou feuilletés de feuilles, en alternance de verre et de poly(butyral de vinyle), qui prennent successivement les positions 2, 2', 2" dans l'avance indexée du transporteur 1. A la position 2 le feuilleté est placé entre deux plaques métalliques parallèles 3a, 3b, formant armatures d'un condensateur 3 reliées aux bornes de sortie d'un générateur 4 de tension haute fréquence d'environ 13 MHz. A la position 2' le feuilleté se place entre les plateaux 5a et 5b d'une presse 5, qui sera décrite plus loin de façon plus détaillée. A la position 2" le feuilleté est dégagé.

Comme on le voit mieux aux figures 2A à 2C, les plateaux de presse 5a, 5b, ou vérins souples, comportent une semelle rigide 50, 51 respectivement, doublée d'une paroi souple 52, 53 sur leurs faces affrontées, la paroi souple 52, 53 débordant les bords de la semelle 50, 51 correspondante pour y être fixée de façon étanche. Des canalisations 5c, 5d traversent les semelles 50, 51 respectivement, pour déboucher dans les faces recouvertes par les parois souples 52, 53. Ces canalisations 5c, 5d peuvent être reliées à une source d'air comprimé.

On notera que les parois souples 52, 53 sont réalisées en un élastomère (caoutchouc de silicone) capable de supporter des températures de 180°C. La bande du transporteur 1 est constituée d'un élastomère analogue, armé de fibres de verre, qui, non seulement doit supporter des températures élevées, mais doit aussi présenter de faibles pertes diélectriques à la fréquence du générateur 4.

Le feuilleté représenté figure 3, est constitué par un empilement de trois feuilles de verre plan 20, 22, 24, séparées par des feuilles de poly(butyral de vinyle) 21 et 23.

On va maintenant décrire les opérations de fabrication de verre feuilleté sur l'installation représentée figure 1.

Le feuilleté est assemblé par empilement, les feuilles de verre étant soigneusement lavées et dégraissées, rincées et séchées de la façon usuelle. Le feuilleté assemblé est posé sur la bande transporteuse 1 à une position en amont de la position 2. Lorsque l'avance de la bande 1 a amené le feuilleté en position 2, le générateur 4 est mis en fonctionnement pour une durée, inférieure à la durée d'index, suffisante pour porter le poly(butyral de vinyle) vers 150°C. Le réglage du générateur, tension aux bornes de sortie et durée de fonctionnement, a été déterminé par des essais de routine.

De façon typique, un panneau comportant deux feuilles de verre et une feuille de poly(butyral de vinyle) de 0,76 mm d'épaisseur, et d'une surface de 0,80 m$^2$ est porté à la température convenable en 30 secondes environ lorsque la puissance HF appliquée est de 45 kW, à la fréquence de 13,56 MHz.

A la position suivante 2' le feuilleté chaud se trouve placé entre les plateaux 5a et 5b de la presse 5, dans la représentation de la figure 2A. De l'air comprimé est alors admis progressivement par les canalisations 5c et 5d, ce qui provoque un bombement des parois souples 52 et 53, par gonflage des espaces 54 et 55 respectivement entre les semelles 50 et 51 et les parois 52 et 53. Le gonflement de l'espace 55 dans le plateau 5b vient amener (figure 2B) la paroi souple au contact de la bande transporteuse 1, puis la soulève avec le feuilleté en position 2'. Dans le même temps le gonflement de l'espace 54 dans le plateau 5a amène (figure 2B) le centre de la paroi souple 52 au contact de la surface supérieure du feuilleté 2'. A partir de ce moment, le gonflement progressif des espaces 54 et 55 ne se traduit plus par un rapprochement des parois souples 52 et 53, limité par l'épaisseur conjointe de la bande 1 et du feuilleté 2', mais par l'élargissement progressif de la zone du feuilleté 2' mise en pression. Cet élargissement progressif depuis le centre vers la périphérie du feuilleté 2' permet d'évacuer l'air qui était resté inclus dans le feuilleté, l'air chassé par le front de zone en pression s'échappant par les bords.

Lorsque les espaces 54 et 55 sont entièrement gonflés (figure 2C) le feuilleté 2' est soumis uniformément à la pression à laquelle l'air est admis dans les plateaux ou vérins souples. Après quoi la pression d'air est supprimée, les parois souples 52 et 53 reprennent leurs positions de repos représentées à la figure 2A, et l'avance suivante du transporteur 1 emporte le feuilleté en position 2", où il peut être déchargé, terminé.

On notera que le contact entre les parois souples 52 et 53 et le feuilleté, rendu intime par l'effet de la pression de l'air comprimé, contribue au refroidissement du feuilleté, et donc au figeage du poly(butyral de vinyle) thermoplastique. Par ailleurs, l'arrivée d'air lors de la mise en pression des espaces 54 et 55 contribue au refroidissement des parois souples 52 et 53, d'autant que l'air est détendu en début de gonflage, ce qui abaisse sa température propre.

Il est possible d'augmenter le refroidissement des parois souples en assurant une circulation d'air dans les espaces 53 et 54 en fin de gonflement. On prévoit alors une canalisation de sortie d'air, telle que 5'$\underline{c}$ (figure 1) qui part de l'espace 53 ou 54 à distance de la canalisation 5$\underline{c}$, cette canalisation 5'$\underline{c}$ étant équipée d'une vanne à seuil de pression, qui s'ouvre en fin de gonflement. Il est clair que les positions respectives des canalisations 5$\underline{c}$ et 5'$\underline{c}$ au débouché dans l'espace interne du vérin souple, sont déterminées pour assurer un balayage convenable de la face interne de la paroi souple.

On notera par ailleurs que, pour faciliter la compréhension, on a exagéré dans les figures l'écartement des plateaux 5$\underline{a}$, 5$\underline{b}$ par rapport aux dimensions transversales. Pour des dimensions transversales de l'ordre du mètre, la latitude de bombement des parois souples sera de l'ordre du centimètre.

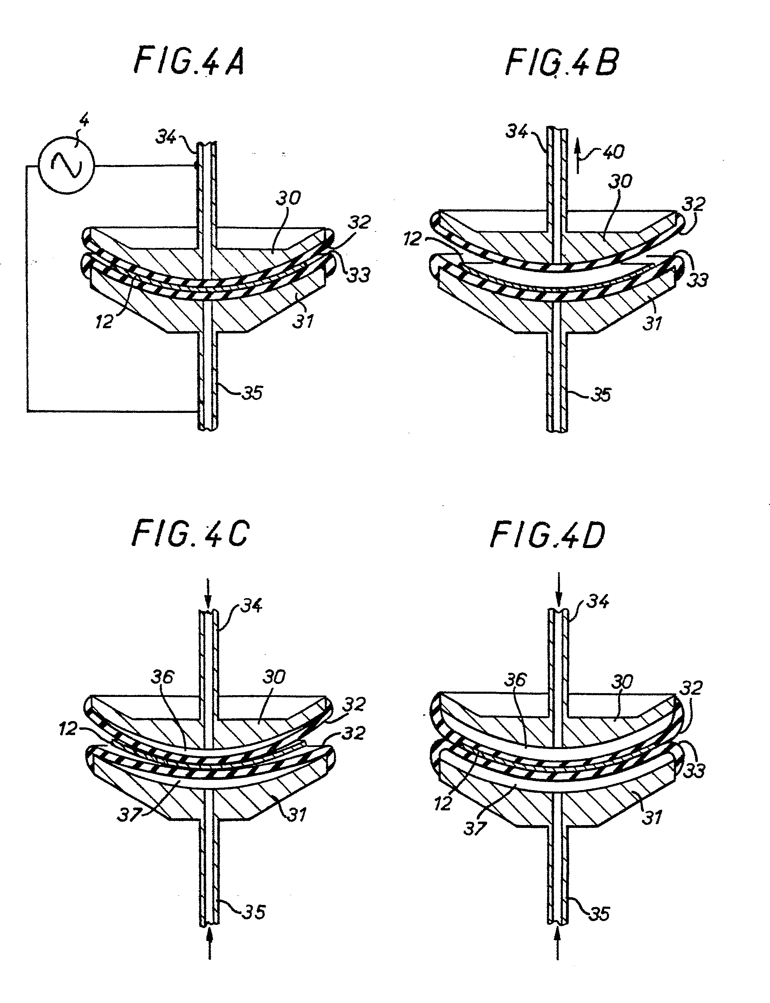

Il en résulte que la fabrication de verre feuilleté en deux postes avec un transporteur sera réservée généralement à la fabrication de vitrages plans. La fabrication de verres feuilletés de forme, tels par exemple que des parebrises de véhicules s'exécutera par un processus que l'on va décrire maintenant en référence aux figures 4A à 4D.

Pour la simplicité on a représenté un verre feuilleté en forme de calotte sphérique.

Le dispositif de fabrication comporte deux plateaux 30 et 31, métalliques, qui reproduisent de façon complémentaire la forme du feuilleté prévu 12. Le plateau inférieur 31 est fixe, tandis que le plateau supérieur 30 est mobile dans une direction verticale. Les surfaces affrontées des plateaux 30 et 31 sont garnies de parois souples 32 et 33 respectivement, fixées par leurs bords de façon étanche sur les bords des plateaux respectifs 30 et 31. Des canalisations, 34 et 35 respectivement, traversent les plateaux 30 et 31 pour déboucher sur la face interne de ces plateaux, sous les parois souples 32 et 33. Ces canalisations peuvent être reliées à une source d'air sous pression, et sont, dans la représentation donnée ici électriquement reliées aux bornes de sortie d'un générateur 4 de tension haute fréquence. On comprendra que les plateaux 30 et 31, avec leurs canalisations 34 et 35 forment les armatures d'un condensateur, ce qui implique que les liaisons mécaniques (non représentées) avec un bâti ou des organes de déplacement du plateau supérieur 30 soient isolées électriquement, les isolements étant prévus pour supporter des tensions élevées à haute fréquence. Dans le même ordre d'idée, les métaux qui constituent les plateaux 30 et 31 sont choisis pour être de bons conducteurs et non ferromagnétiques, tout en présentant une résistance mécanique convenable. Toutefois seule la conductivité superficielle est à considérer, de sorte que les plateaux pourront être réalisés en une matière isolante en soi, plaquée d'un métal bon conducteur, tel que le cuivre.

On aura compris, par comparaison avec les dispositions décrites aux figures 1 et 2A-2C, que la paire de plateaux 30, 31 jouera successivement le rôle des plaques 3a, 3b pour le chauffage de la matière thermoplastique, et le rôle des vérins souples 5a et 5b pour le pressage du feuilleté 12.

Le feuilleté 12 est assemblé par empilage de feuilles de verre et de poly(butyral de vinyle) préalablement mises en forme, de façon classique. Après assemblage, le plateau 30 étant largement relevé, le feuilleté 12 est déposé sur la feuille souple 33, qui repose sur la surface en forme du plateau 31, après quoi le plateau 30 est descendu pour reposer, sous son propre poids, sur le feuilleté 12, par l'intermédiaire de la feuille souple 32, comme représenté à la figure 4A. Le générateur 4 est alors mis en fonctionnement, pour chauffer la matière thermoplastique par pertes diélectriques.

Lorsque la matière thermoplastique a été portée à une température suffisante, le générateur 4 est arrêté, puis le plateau 30, comme représenté à la figure 4B, est relevé d'une hauteur déterminée, suivant la flèche 40, puis bloqué dans cette position. De l'air comprimé est alors admis progressivement par les canalisations 34 et 35, pour gonfler les espaces 36 et 37 formés entre les plateaux 30 et 31 et les parois souples 32 et 33. La mise en pression du feuilleté 12, comme représenté figure 4C, commence par le centre, par suite du gonflement progressif des espaces 36 et 37. En fin de gonflage (figure 4D) la pression s'exerce uniformément sur le feuilleté 12.

Bien entendu, on pourra ménager une circulation d'air comprimé dans les espaces 36 et 37, comme on l'a expliqué en référence à la figure 1. La disposition des canalisations d'arrivée et de départ devra tenir compte de la forme imposée du feuilleté.

**0161125**

En raison de la multiplicité de formes envisageables pour les feuilletés bombés, par exemple parebrises de véhicules automobiles, et de la nécessité que les plateaux 30, 31 suivent étroitement les formes du feuilleté, il sera souvent intéressant de réaliser les plateaux en matière plastique moulée, le moulage du plateau s'exécutant sur une feuille de verre déjà mise en forme, et en garnissant la matière moulée d'une couche de cuivre mince. En effet, aux fréquences utilisées, la circulation du courant est pratiquement localisée dans les couches superficielles des conducteurs. Toutefois il faudra avoir à l'esprit que tous les isolants qui sont susceptibles d'être soumis à un champ électrique intense à la fréquence de travail doivent présenter de faibles pertes diélectriques.

On aura compris que selon les dispositions représentées tant aux figures 1, 2A, 2B, 2C qu'aux figures 4A, 4B, 4C, 4D, la succession des opérations de chauffe et de pressage, le réglage de durée d'application de la tension haute fréquence, l'avance de la bande de transporteur 1 de la figure 1 et les déplacements du plateau 30 aux figures 4A à 4D, sont commandés par un dispositif central, dont la conception relève de la compétence d'un homme du métier.

REVENDICATIONS

1. Procédé de fabrication de verre feuilleté de sécurité, où l'on constitue un feuilleté (2, 12) en alternant feuilles de verre (20, 22, 24) et feuilles de matière thermoplastique transparente (21, 23), les feuilles extrêmes (20, 24) étant de verre, on chauffe le feuilleté en sorte de ramollir la matière thermoplastique jusqu'à la rendre susceptible d'adhérer au verre, on évacue l'air présent dans le feuilleté pour accomplir le contact intime entre verre (20, 22, 24) et matière thermoplastique (21, 23), puis on laisse refroidir le feuilleté au moins jusqu'à figeage de la matière thermoplastique (21, 23), procédé caractérisé en ce que l'on soumet le feuilleté (2, 12) à un champ électrique à une fréquence où les pertes diélectriques de la matière thermoplastique sont notables, pendant une durée suffisante pour que la matière ramollisse, on dispose le feuilleté (2', 12) entre deux parois souples (52, 53 ; 32, 33) confinant respectivement deux enceintes (54, 55 ; 36, 37) où peut être admis un fluide sous pression, les parois souples étant sensiblement parallèles au feuilleté, et sensiblement plus écartées que l'épaisseur de ce feuilleté, et on admet progressivement le fluide sous pression dans les enceintes (54, 55 ; 36, 37) en sorte que les parois souples (52, 53 ; 32, 33) en se déformant viennent serrer le feuilleté (2', 12) d'abord dans une zone centrale qui s'élargit ensuite jusqu'à couvrir toute la surface du feuilleté (2', 12).

2. Procédé suivant la revendication 1, notamment pour la fabrication de vitrage plan (2), caractérisé en ce que dans un premier poste on place le feuilleté (2) entre deux armatures planes (3a, 3b) d'un condensateur (3) relié aux bornes d'un générateur (4) de haute fréquence, et à un second poste (5) on place le feuilleté chaud (2') entre deux parois souples (52, 53) sensiblement planes et écartées d'une distance plusieurs fois supérieure à l'épaisseur du feuilleté (2').

3. Procédé suivant la revendication 1, pour la fabrication notamment de verres feuilletés (12) de forme, caractérisé en ce que l'on place le feuilleté (12) entre deux plateaux métalliques (30, 31) de forme générale correspondant à celle du feuilleté (12) et garnis sur leurs faces affrontées de parois souples (32, 33) fixées de façon étanche par leurs bords sur les plateaux (30, 31), le feuilleté (12) étant pris entre les parois souples (32, 33), on établit entre les plateaux métalliques (30, 31) une tension haute fréquence, on coupe cette tension lorsque la matière thermoplastique est ramollie, on écarte les plateaux métalliques (30, 31) d'une distance plusieurs fois supérieure à l'épaisseur du feuilleté (12) et on introduit progressivement le fluide sous pression dans les espaces (36, 37) entre chaque plateau et la paroi souple correspondante.

4. Dispositif pour la fabrication de verre feuilleté de sécurité, notamment verre feuilleté de forme, par un procédé où l'on constitue un feuilleté (12) en alternant feuilles de verre (20, 22, 24) et feuilles de matière thermoplastique (21, 23), les feuilles extrêmes étant de verre, on chauffe le feuilleté jusqu'à ramollir la matière thermoplastique et la rendre adhérente au verre, et on évacue l'air présent dans le feuilleté, dispositif caractérisé en ce qu'il comporte deux plateaux métalliques (30, 31) superposés dont la forme des faces en regard correspond sensiblement à celle du feuilleté (12), garnis sur ces faces de parois souples (32, 33) fixées respectivement aux plateaux (30, 31) de façon étanche par leurs bords, des moyens de coupler les plateaux (30, 31) aux bornes d'un générateur de haute fréquence (4) adapté à engendrer des pertes diélectriques dans la matière thermoplastique, des premiers moyens (40) pour écarter le plateau supérieur (30) du plateau inférieur (31) d'une hauteur plusieurs fois supérieure à l'épaisseur du feuilleté (12) et des deuxièmes moyens (34, 35) pour introduire simultanément un fluide sous pression entre plateaux et parois souples, et des moyens pour coordonner les opérations du générateur (4) de haute fréquence et des premiers (40) et deuxièmes (34, 35) moyens.

5. Dispositif pour la fabrication de verre feuilleté de sécurité notamment plan suivant un procédé où l'on constitue un feuilleté (2) en alternant feuilles de verre (20, 22, 24) et feuilles de matière thermoplastique (21, 23), les feuilles extrêmes étant de verre, on chauffe le feuilleté (2) jusqu'à ramollir la matière thermoplastique et la rendre adhérente au verre, et on évacue l'air présent dans le feuilleté, dispositif caractérisé en ce qu'il comporte un transporteur à bande souple (1), à avance indexée, susceptible de recevoir des feuilletés constitués successifs (2", 2', 2), à une première position (2) d'index, une paire de plaques métalliques (3a, 3b) sensiblement parallèles à la bande de transporteur (1) de part et d'autre de celle-ci, avec une surface correspondant sensiblement à celle du feuilleté (2), et connectées respectivement aux bornes de sortie d'un générateur (4) haute fréquence adapté à chauffer le feuilleté (2) par pertes diélectriques dans la matière thermoplastique, et, à une seconde position d'index (2') en aval de la première, deux plaques vérins (5a, 5b) disposées de part et d'autre de la bande (1) du transporteur sensiblement parallèlement à celle-ci, et de surface au moins égale à celle du feuilleté, chaque plaque vérin comprenant un corps (50, 51) plat rigide garni sur sa face tournée vers la bande (1) d'une paroi souple (52, 53) fixée de façon étanche par son bord, des canaux (5c, 5d) reliant la face du corps (50, 51) sous la paroi souple (52, 53) à une source de fluide sous pression par l'intermédiaire de moyens de vanne, et des moyens de commande aptes à coordonner l'avance indexée du transporteur (1), la mise en action du générateur (4) et l'admission de fluide sous pression simultanément à l'intérieur des plaques vérins (5a, 5b).

6. Dispositif selon la revendication 4 ou la revendication 5, caractérisé en ce que les espaces (54, 55 ; 36, 37) sous les parois souples (52, 53 ; 32, 33) sont munis de canaux d'échappement (5'c) avec une soupape réglée pour laisser échapper le fluide sous pression au-delà d'une pression réglée en sorte d'assurer une circulation de fluide dans ces espaces (54, 55 ; 36, 37).

0161125

FIG. 1

FIG. 2A

FIG. 2B

FIG. 2C

FIG. 3

FIG.4A

FIG.4B

FIG.4C

FIG.4D

Office européen
des brevets

**RAPPORT DE RECHERCHE EUROPEENNE**

**0161125**
Numéro de la demande

EP 85 40 0497

## DOCUMENTS CONSIDERES COMME PERTINENTS

| Categorie | Citation du document avec indication. en cas de besoin des parties pertinentes | Revendication concernée | CLASSEMENT DE LA DEMANDE (Int. Cl.4) |
|---|---|---|---|
| Y | US-A-4 247 355 (H.-G. FRIEDRICH et al.) <br> * Colonne 1, ligne 53 - colonne 2, ligne 7; colonne 4, ligne 1 - colonne 5, ligne 68; figures 1-4 * <br><br> --- | 1,4,5 | B 32 B 31/00 <br> C 03 C 27/12 <br> B 29 C 27/08 |
| Y | DE-C- 698 566 (SIEMENS) <br> * En entier * | 1,4,5 | |
| A | | 3 | |
| | --- | | |
| Y | US-A-1 901 574 (A.G. WORRALL) <br> * Page 1, lignes 32-75 * | 1,4,5 | |
| A | | 2 | DOMAINES TECHNIQUES RECHERCHES (Int. Cl.4) |
| | --- | | |
| A | US-A-3 655 488 (GOLDSTEIN et al.) <br><br> --- | | B 32 B <br> B 29 C <br> C 03 C |
| A | US-A-1 777 642 (A.L. HARRINGTON) <br><br> ----- | | |

Le présent rapport de recherche a été établi pour toutes les revendications

| Lieu de la recherche LA HAYE | Date d'achèvement de la recherche 08-07-1985 | Examinateur VAN BELLEGHEM W.R. |
|---|---|---|